# EUROPÄISCHE PATENTANMELDUNG

(11) **EP 4 707 982 A1**
(43) Veröffentlichungstag der Anmeldung: **11.03.2026**
(21) Anmeldenummer: 25198514.9
(22) Anmeldetag: 27.08.2025
(51) Int. Cl.: G05D 1/243, G05D 1/246, G05D 1/633, G05D 105/28, G05D 107/70, G05D 109/10, G05D 1/698

(54) **SYSTEM ZUR ERKENNUNG EINES GEFAHRENZUSTANDS ZUR ABGESICHERTEN STEUERUNG VON MOBILEN ROBOTERN IN EINEM ÜBERWACHUNGSBEREICH EINER INDUSTRIEANLAGE**

(30) Priorität: 06.09.2024 DE 102024125627
(71) Anmelder: SICK AG, 79183 Waldkirch (DE)
(72) Erfinder: STEINKEMPER, Heiko, 79183 Waldkirch (DE); SCHOTT, Michael, 79115 Freiburg (DE); GEBAUER, Jens, 79183 Waldkirch (DE)
(74) Vertreter: Manitz Finsterwald Patent- und Rechtsanwaltspartnerschaft mbB

(57) **Zusammenfassung**

System zur Bestimmung einer Position zumindest eines Subjekts in einem Überwachungsbereich einer Industrieanlage und/oder zur Erkennung eines Gefahrenzustands zur abgesicherten Steuerung zumindest eines Roboters in dem Überwachungsbereich der Industrieanlage, umfassend
- den Roboter, wobei der Roboter mobil ist,
- zumindest einen Sensor, wobei der Sensor an dem Roboter angebracht ist und mit dem Roboter mitbewegbar ist, wobei der Sensor dazu ausgebildet ist, Daten der Umgebung des Roboters zu erfassen;
- eine Verarbeitungsvorrichtung, wobei die Verarbeitungsvorrichtung einen Prozessor mit assoziiertem Speicher umfasst, mit dem Roboter und mit dem Sensor verbunden ist und dazu ausgebildet ist, die von dem Sensor erfassten Daten zu erhalten, anhand der erfassten Daten eine absolute Position des Roboters in dem Überwachungsbereich zu bestimmen, eine relative Position des zumindest einen Subjekts, insbesondere einer Person, wobei sich das Subjekt in dem Überwachungsbereich aufhalten kann, relativ zu dem Roboter zu bestimmen und/oder eine absolute Position des Subjekts in dem Überwachungsbereich zu bestimmen, basierend zumindest auf der bestimmten relativen Position des Subjekts relativ zu dem Roboter und/oder der bestimmten absoluten Position des Subjekts einen Gefahrenzustand zu erkennen, und bei Erkennung des Gefahrenzustands den Roboter in einen abgesicherten Steuerungsmodus zu versetzen.

## Beschreibung

Die Erfindung betriff ein System, eine Verwendung einer Verarbeitungseinrichtung, ein Verfahren, und eine Verarbeitungseinrichtung zur Bestimmung einer Position zumindest eines Subjekts in einem Überwachungsbereich einer Industrieanlage und/oder zur Erkennung eines Gefahrenzustands zur abgesicherten Steuerung zumindest eines Roboters in dem Überwachungsbereich der Industrieanlage.

In einer Industrieanlage können sich sowohl autonome und/oder andere mit Sensoren ausgestattete Fahrzeuge und Roboter, und insbesondere sogenannte Autonomous Mobile Robots (AMRs), als auch Subjekte, und insbesondere Personen, in demselben Überwachungsbereich oder Gefahrenbereich gleichzeitig aufhalten und/oder bewegen. Dies stellt besondere Herausforderungen an die Steuerung der AMRs. Einerseits muss die Sicherheit der Subjekte, insbesondere durch Kollisionsvermeidung, gewährleistet werden. Des Weiteren ist eine Steigerung der Produktivität und Effizienz durch Vermeidung und/oder Reduktion von (sicherheitsbedingten) Stillstandzeiten und Geschwindigkeitsreduktionen gewünscht. Um diese Anforderungen an die Steuerung der AMRs zu erfüllen, sollten die Positionen der Subjekte in einem Überwachungsbereich möglichst genau bestimmt und insbesondere lückenlos nachverfolgt werden.

Bekannte Systeme verwenden Funkanker- oder Kamera-basierte Lösungen, um die Positionen von Subjekten in einem Überwachungsbereich einer Industrieanlage zu bestimmen. Dabei wird eine aufwändige Infrastruktur an in den Überwachungsbereichen fest installierten Sensoren oder Kameras benötigt, die Daten erfassen, anhand denen die Positionen der Subjekte in dem Überwachungsbereich bestimmt werden können. Hinzu kommt, dass Gegenstände, und insbesondere metallische Gegenstände, die sich im Überwachungsbereich befinden, eine unerwünschte Abschirmung des Erfassungsbereichs der Sensoren oder Kameras bewirken können, sodass die Anzahl der Sensoren oder Kameras noch zusätzlich erhöht werden muss, um eine ausreichende Abdeckung des Überwachungsbereichs zu gewährleisten.

In bekannten Systemen können auch Marker- oder sogenannte Tag-basierte Lösungen für die Positionsbestimmung von Subjekten zum Einsatz kommen. Diese benötigen jedoch ebenfalls eine aufwändige Infrastruktur an Sensoren, und typischerweise ein dichtes Netz oder Raster an Bezugssensoren oder Ankern. Zudem müssen die entsprechenden Tags von den Subjekten, z.B. integriert im Helm, in der Warnweste oder zum An- oder Umhängen, mitgetragen werden, damit mittels Abstandsmessungen zwischen einem Tag und typischerweise drei Ankerpunkten die Position eines Subjekts bestimmt werden kann.

Der Erfindung liegt die Aufgabe zugrunde, Systeme zur Bestimmung einer Position zumindest eines Subjekts in einem Überwachungsbereich einer Industrieanlage und/oder zur Erkennung eines Gefahrenzustands zur abgesicherten Steuerung von mobilen Robotern, und insbesondere AMRs, in dem Überwachungsbereich der Industrieanlage zu verbessern und insbesondere effizienter zu gestalten.

Zur Lösung der Aufgabe ist ein System mit den Merkmalen des Anspruchs 1 vorgesehen. Vorteilhafte Ausbildungen der Erfindung sind den Unteransprüchen, der Beschreibung und den Zeichnungen zu entnehmen.

Das erfindungsgemäße System zur Bestimmung einer Position zumindest eines Subjekts in einem Überwachungsbereich einer Industrieanlage und/oder zur Erkennung oder Einschätzung eines Gefahrenzustands zur abgesicherten Steuerung zumindest eines Roboters in dem Überwachungsbereich der Industrieanlage umfasst den zumindest einen Roboter, wobei der Roboter mobil ist und bevorzugt ein fahrerloses Transportfahrzeug oder einen autonomen mobilen Roboter (AMR) umfasst. Es versteht sich, dass der Roboter vorzugsweise in einem normalen Steuerungsmodus und/oder in einem abgesicherten Steuerungsmodus steuerbar ist. Es versteht sich ebenfalls, dass der Begriff einer Industrieanlage hier breit zu verstehen ist und beispielsweise eine Fabrikhalle, eine Produktionshalle, eine Lagerhalle, ein Logistikzentrum, eine Anlage für Tierhaltung, eine Anlage der chemischen Industrie, eine Abfallverbrennungsanlage oder ein Kraftwerk umfassen kann.

Das erfindungsgemäße System umfasst ferner zumindest einen Sensor, wobei der Sensor an dem Roboter angebracht ist, also mit dem Roboter gekoppelt ist, und mit dem Roboter mitbewegbar ist. Der Sensor ist dazu ausgebildet, Daten der Umgebung des Roboters zu erfassen, wobei die von dem Sensor erfassten Daten bevorzugt für eine Steuerung, und insbesondere autonome Steuerung, des Roboters in dem Überwachungsbereich verwendbar sind.

Das erfindungsgemäße System umfasst ferner eine Verarbeitungsvorrichtung, wobei die Verarbeitungsvorrichtung einen Prozessor mit assoziiertem Speicher umfasst und mit dem Roboter und mit dem Sensor verbunden ist. Die Verarbeitungsvorrichtung kann dabei mit dem Roboter und mit dem Sensor in kabelgebundener oder kabelloser, und bevorzugt in kabelloser, Signalverbindung stehen, um Daten von dem Sensor zu erhalten und Anweisungen an den Roboter übermitteln zu können.

Die Verarbeitungsvorrichtung des erfindungsgemäßen Systems ist dazu ausgebildet, die von dem Sensor erfasste Daten zu erhalten, anhand der erfassten (und erhaltenen) Daten eine absolute Position des Roboters in dem Überwachungsbereich zu bestimmen, eine relative Position des zumindest einen Subjekts, insbesondere einer Person, wobei sich das Subjekt in dem Überwachungsbereich aufhalten kann, relativ zu dem Roboter zu bestimmen und/oder eine absolute Position des zumindest einen Subjekts in dem Überwachungsbereich zu bestimmen.

Es versteht sich, dass die Bestimmung einer Position nicht nur die einmalige, sondern auch die mehrmalige, und insbesondere kontinuierliche oder regelmäßige, Bestimmung der Position umfassen kann. In anderen Worten wird die absolute Position des Roboters, die relative Position des Subjekts und/oder die absolute Position des Subjekts nachverfolgt oder getrackt. Ebenfalls versteht sich, dass nicht nur die relative und/oder absolute Position eines Subjekts, sondern auch die relativen und/oder absoluten Positionen von mehreren Subjekten nachverfolgt werden können. Mit einer absoluten Position kann eine Position in einem globalen Koordinatensystem z.B. innerhalb des Überwachungsbereichs gemeint sein. Die absolute Position des Subjekts kann beispielsweise anhand der relativen Position des Subjekts zu dem Roboter berechnet werden. Die Verarbeitungsvorrichtung kann Informationen über das globale Koordinatensystem durch Erfassen einer Positionsmarke in dem Überwachungsbereich mittels des Sensors erhalten. Alternativ oder zusätzlich kann die Verarbeitungsvorrichtung Informationen über das globale Koordinatensystem von einer externen Speichervorrichtung erhalten, mit der die Verarbeitungsvorrichtung vorzugsweise in kabelloser Signalverbindung steht. Die Verarbeitungsvorrichtung kann, alternativ oder zusätzlich, die absolute Position des Roboters mittels Odometrie bestimmen bzw. nachverfolgen. Die Verarbeitungsvorrichtung kann, alternativ oder zusätzlich, die absolute Position des Roboters mittels Erfassung von Markierungen in dem Überwachungsbereich bestimmen bzw. nachverfolgen. Für die Erkennung des Gefahrenzustands kann jedoch auch allein die Bestimmung der relativen Position des Subjekts relativ zu dem Roboter ausreichend sein.

Bei dem Überwachungsbereich kann es sich insbesondere um denjenigen Bereich handeln, der potentiell durch den Sensor (oder die Sensoren) erfasst werden kann.

Die Verarbeitungsvorrichtung ist ferner dazu ausgebildet, basierend zumindest auf der bestimmten relativen Position des Subjekts relativ zu dem Roboter und/oder der bestimmten absoluten Position des Subjekts einen Gefahrenzustand zu erkennen, und bei Erkennung des Gefahrenzustands den Roboter in einen abgesicherten Steuerungsmodus zu versetzen. Die Verarbeitungsvorrichtung kann den Roboter bei Erkennung des Gefahrenzustands vorzugsweise aus einem normalen Steuerungsmodus in den abgesicherten Steuerungsmodus versetzen.

Der Erfindung liegt mit anderen Worten der Gedanke zugrunde, die Daten, die von zumindest einem Sensor erfasst werden, der auf dem mobilen Roboter selbst angebracht ist, und die für die autonome Steuerung des Roboters verwendbar sind, für die Nachverfolgung der relativen Position des Subjekts relativ zu dem Roboter und/oder für die Nachverfolgung der absoluten Position des Subjekts in den Überwachungsbereich zu verwenden. Die relative Position des Subjekts relativ zu dem Roboter und/oder die absolute Position des Subjekts in dem Überwachungsbereich, anhand denen der Gefahrenzustand erkannt wird, werden idealerweise lückenlos nachverfolgt und aktuell gehalten. Auf diese Weise kann der Gefahrenzustand zuverlässiger erkannt werden. Weitere Sensoren, die stationär in dem Überwachungsbereich angebracht sind, sind nicht notwendig, können aber dennoch in dem System für Redundanz mit eingebunden werden. In dem System können alle Daten, die von dem (oder den) Sensor(en) auf dem (oder den) mobilen Roboter(n), und auch von stationären Sensoren, in der Verarbeitungsvorrichtung zusammengeführt werden, um die relative Position und oder die absolute Position des Subjekts möglichst genau und idealerweise lückenlos nachverfolgen zu können. Die Verarbeitungsvorrichtung kann dann den Gefahrenzustand anhand der zusammengeführten Daten erkennen, um den (oder die) Roboter in den abgesicherten Steuerungsmodus zu versetzen. In anderen Worten können somit alle Roboter in dem System auf aktuelle Informationen bezüglich der relativen und/oder absoluten Position des Subjekts zugreifen und zentral über die Verarbeitungsvorrichtung in den abgesicherten Steuerungsmodus versetzt werden, wenn der Gefahrenzustand erkannt wird. Auf diese Weise kann die Sicherheit der Subjekte, die sich in dem Überwachungsbereich aufhalten, erhöht werden, ohne übermäßig lange (sicherheitsbedingte) Stillstandzeiten und Geschwindigkeitsreduktionen hinnehmen zu müssen, was insgesamt die Effizienz in dem System erhöhen kann.

Der Sensor, der Roboter und die Verarbeitungsvorrichtung können zur Datenübertragung jeweils eine Empfangs- und Sendeeinheit bzw. eine Empfangs/Sendeeinheit umfassen. Die Verarbeitungsvorrichtung kann die erfassten Daten erhalten, indem der Sensor die erfassten Daten an die Verarbeitungsvorrichtung übermittelt und/oder die Verarbeitungsvorrichtung die Daten von dem Sensor abruft. Der Prozessor der Verarbeitungsvorrichtung kann einen oder mehrere Kerne, ein SoC, einen Mikrocontroller und/oder einen FPGA umfassen. Der assoziierte Speicher kann in der Verarbeitungsvorrichtung verbaut sein oder ein externer Speicher oder Cloud-Server sein, auf den die Verarbeitungsvorrichtung zugreifen kann.

Vorzugsweise sind die erfassten Daten für eine Simultane Positionsbestimmung und Kartierung (SLAM) verwendbar. Gemäß einer Ausführungsform ist die Verarbeitungsvorrichtung dazu ausgebildet, die absolute Position des Roboters, die relative Position des Subjekts relativ zu dem Roboter und/oder die absolute Position des Subjekts mittels SLAM zu bestimmen. In anderen Worten kann die Verarbeitungsvorrichtung dazu ausgebildet sein, eine dynamische Karte zu erzeugen, in der die bestimmte absolute Position des Roboters, die bestimmte relative Position des Subjekts relativ zu dem Roboter und/oder die bestimmte absolute Position des Subjekts ständig neu eingetragen werden oder bereits eingetragene entsprechende Positionswerte aktualisiert oder überschrieben werden. Es versteht sich, dass die mittels SLAM generierte dynamische Karte dabei in dem assoziierten Speicher vorgehalten werden kann. Vorzugsweise wird die absolute Position des Subjekts mittels SLAM nachverfolgt. Eine solche Konfiguration eröffnet die Möglichkeit, dass mehrere Roboter in dem System auf die gleiche dynamische Karte zugreifen können und basierend auf der gleichen dynamischen Karte gesteuert werden können.

Gemäß einer Ausführungsform ist die Verarbeitungsvorrichtung dazu ausgebildet, allein basierend auf der bestimmten relativen Position des Subjekts relativ zu dem Roboter den Gefahrenzustand zu erkennen, und bei Erkennung des Gefahrenzustands den Roboter in einen abgesicherten Steuerungsmodus zu versetzen.

Gemäß einer Ausführungsform ist die Verarbeitungsvorrichtung dazu ausgebildet, basierend auf der bestimmten absoluten Position des Roboters und der bestimmten relativen Position des Subjekts relativ zu dem Roboter die absolute Position des Subjekts in dem Überwachungsbereich zu bestimmen. In anderen Worten kann die absolute Position des Roboters in dem Überwachungsbereich bekannt sein, sodass die absolute Position des Subjekts in dem Überwachungsbereich anhand der bestimmten relativen Position des Subjekts relativ zu dem Roboter bestimmbar ist.

Gemäß einer weiteren Ausführungsform ist die Verarbeitungsvorrichtung dazu ausgebildet, basierend auf der bestimmten absoluten Position des Subjekts und der bestimmten absoluten Position des Roboters den Gefahrenzustand zu erkennen. In anderen Worten kann das System dazu ausgebildet sein, die absolute Position des Subjekts und die absoluten Position des Roboters in dem Überwachungsbereich kontinuierlich zu bestimmen, zu aktualisieren und/oder lückenlos zu überwachen, sodass die absolute Position des Subjekts und die absolute Position des Roboters, anhand denen der Gefahrenzustand erkannt wird, idealerweise im Wesentlichen jederzeit bekannt und aktuell sind. Auf diese Weise kann der Gefahrenzustand zuverlässiger erkannt werden.

Gemäß einer weiteren Ausführungsform ist die Verarbeitungsvorrichtung dazu ausgebildet, basierend auf der bestimmten relativen Position des Subjekts relativ zu dem Roboter einen Abstand zwischen dem Subjekt und dem Roboter zu bestimmen und basierend auf dem bestimmten Abstand den Gefahrenzustand zu erkennen.

Gemäß einer Ausführungsform umfasst der abgesicherte Steuerungsmodus ein Absenken einer Bewegungsgeschwindigkeit des Roboters, eine Verlangsamung des Roboters, ein Verfahren des Roboters in eine Halteposition, einen Sicherheitsbetrieb, eine Änderung der Bewegungsrichtung des Roboters, eine Änderung einer Route des Roboters, eine Stilllegung des Roboters, ein Stoppen der Bewegung des Roboters, eine Umleitung des Roboters, und/oder eine Änderung eines Bewegungsablaufs des Roboters, eine Änderung einer von dem Roboter ausgeführten Aktion.

Vorzugsweise umfasst der abgesicherte Steuerungsmodus, alternativ oder zusätzlich, die Anweisung, dass der Roboter den an ihm angebrachten Sensor auf das Subjekt ausrichtet und/oder das Subjekt in dem Überwachungsbereich verfolgt. Auf diese Weise kann die relative Position des Subjekts relativ zu dem Roboter und/oder die absolute Position des Subjekts in dem Überwachungsbereich lückenlos nachverfolgt werden. Vorzugsweise umfasst der abgesicherte Steuerungsmodus, dass sowohl die Bewegungsgeschwindigkeit des Roboters herabgesetzt wird als auch die Anweisung an den Roboter, den an ihm angebrachten Sensor auf das Subjekt auszurichten und/oder das Subjekt in dem Überwachungsbereich zu verfolgen.

Gemäß einer Ausführungsform umfasst der Sensor eine Kamera, ein Funkmodul, einen Laserscanner, ein Tag-Lesegerät, ein GPS-Modul und/oder einen Ultraschallsensor. Es versteht sich, dass die Kamera eine 3D-Kamera, eine 2D-Kamera unter Verwendung von entsprechenden Algorithmen, und/oder eine 2D-Kamera unter Verwendung von visuellen Markern sein kann. Insbesondere kann die Kamera eine ToF (Time of Flight) -Kamera sein. Es versteht sich, dass der Tag beispielsweise ein RFID (Radio-Frequency Identification) -Tag sein kann. Mit einem Tag kann aber auch eine (visuelle) Referenzmarkierung und/oder ein QR Code gemeint sein. Es versteht sich, dass so viele Tags in der Umgebung platziert sein können, dass sich immer mindestens ein Tag im Erfassungsbereich des an dem Roboter angebrachten Sensors befindet.

Gemäß einer Ausführungsform umfasst der Gefahrenzustand die Anwesenheit des Subjekts in dem Überwachungsbereich oder in einem Teil des Überwachungsbereichs, das Betreten des Überwachungsbereichs oder des Teils des Überwachungsbereichs durch das Subjekt, ein Erreichen oder Überschreiten einer Anzahl an Subjekten in dem Überwachungsbereich oder in dem Teil des Überwachungsbereichs, das Erreichen oder Unterschreiten einer Entfernung des Roboters zu dem Subjekt, die Anwesenheit des Roboters in einem Schutzbereich in dem Überwachungsbereich, das Bewegen des Roboters in den Schutzbereich hinein, die Anwesenheit des Roboters in einem Aufenthaltsbereich des Subjekts und/oder das Bewegen des Roboters in den Aufenthaltsbereich des Subjekts hinein umfasst. Es versteht sich, dass der Teil des Überwachungsbereichs vordefiniert sein kann und insbesondere einem Bereich entsprechen kann, der von dem Roboter befahrbar ist. Zusätzlich oder alternativ kann der Teil des Überwachungsbereichs dem Sichtfeld des Sensors entsprechen. Der sogenannte Schutzbereich oder das sogenannte Schutzfeld kann ein Teil des Überwachungsbereichs, und insbesondere ein Teil des Sichtfelds eines Sensors sein, wobei ein Warnsignal ausgegeben werden kann, wenn der Schutzbereich, z.B. von einer Person oder einem, insbesondere autonomen, Roboter verletzt wird.

Gemäß einer Ausführungsform basiert der Aufenthaltsbereich des Subjekts auf einem möglichen Aufenthaltsort des Subjekts oder entspricht einer Fläche oder einem Volumen eines möglichen Aufenthaltsorts des Subjekts, wobei der mögliche Aufenthaltsort des Subjekts auf der bestimmten relativen Position des Subjekts relativ zu dem Roboter und/oder der bestimmten absoluten Position des Subjekts basiert. **In** anderen Worten kann mit dem Aufenthaltsbereich des Subjekts ein Bereich gemeint sein, in dem sich das Subjekt mit zumindest einer vorbestimmten Wahrscheinlichkeit aufhalten wird oder aufhält. Die Wahrscheinlichkeit des Aufenthalts für eine Position innerhalb des Aufenthaltsbereichs kann anhand der letzten bestimmten Position des Subjekts, dessen Lage und/oder Größe und/oder dessen Bewegungsgeschwindigkeit und/oder Bewegungsrichtung bestimmt werden. Je weiter entfernt die Position von der letzten bestimmten Position des Subjekts ist, je länger die letzte Positionsbestimmung zurückliegt und/oder je weniger die Position in der Bewegungsrichtung des Subjekts liegt, desto niedriger kann die Wahrscheinlichkeit des Aufenthalts für diese Position sein. In entsprechender Weise kann der Aufenthaltsbereich einem um die letzte bestimmte Position des Subjekts liegenden Bereich entsprechen, dessen Lage und/oder Größe nach der Zeit, die seit der letzten Positionsbestimmung verstrichen ist, der letzten bestimmten (bzw. bekannten) Position zu einem bestimmten Zeitpunkt t₁, der Bewegungsgeschwindigkeit und/oder Bewegungsrichtung des Subjekts festgelegt werden kann. In anderen Worten, je mehr Zeit verstrichen ist und je größer die mögliche Bewegungsgeschwindigkeit ist, desto größer kann die Fläche oder das Volumen des potenziellen Aufenthaltsbereiches sein, sofern dieser nicht durch andere Faktoren wie eine Wand oder den Erfassungsbereich eines Sensors begrenzt wird. Ausgehend von der letzten bestimmten Position zum Zeitpunkt t₁ kann eine Wahrscheinlichkeit für die weitere Bewegung in Abhängigkeit von der Bewegungsrichtung, der Bewegungsgeschwindigkeit, und/oder einem Bewegungsvektor (d.h. mit Bewegungsrichtung und Bewegungsgeschwindigkeit als Komponenten) und der verstrichenen Zeitspanne Δt errechnet werden. Der Aufenthaltsbereich kann beispielsweise einem Kreisbereich um die letzte bestimmte Position des Subjekts oder einem Dreieck, bei welchem eine Ecke durch die letzte bestimmte Position des Subjekts und/oder die zugehörige Höhe des Dreiecks durch die Bewegungsrichtung, die Bewegungsgeschwindigkeit und/oder den Bewegungsvektor definiert wird, entsprechen.

Gemäß einer Ausführungsform sind Bereiche, die von dem Subjekt (bspw. aufgrund von vorhandenen physischen Barrieren) nicht betreten werden können, und/oder Bereiche, die sich im Sichtfeld von mobilen, an einem Roboter angebrachten Sensoren und/oder im Sichtfeld von stationären Sensoren befinden, von dem Aufenthaltsbereich des Subjekts ausgenommen.

Die Größe und/oder die Lage des Aufenthaltsbereich des Subjekts ist bevorzugt veränderbar, und kann insbesondere verkleinert, vergrößert, verschoben und/oder verdreht werden. Sollte zum Beispiel ein AMR in einen Gang einfahren, in dem zuletzt ein Subjekt detektiert wurde, bevor dieses Subjekt theoretisch das entsprechende Ende des Ganges erreicht haben könnte, und ist anhand der bei der Fahrt durch den Gang erfassten Daten kein Subjekt detektierbar, so kann der Aufenthaltsbereich des Subjekts in diesem Bereich wieder verringert werden. Im Falle einer erneuten Detektion wäre verständlicherweise wieder eine exakte Position des Subjekts bekannt.

Gemäß einer Ausführungsform wird der Aufenthaltsbereich des Subjekts verkleinert, wenn die Verarbeitungsvorrichtung anhand von einem weiteren Sensor erfasste Daten erkennt, dass das Subjekt den Aufenthaltsbereich verlässt und/oder nicht (mehr) in dem Aufenthaltsbereich anwesend ist. Der weitere Sensor kann beispielsweise ein zweiter Sensor in dem System sein, der an einem zweiten Roboter angebracht ist, und Daten erfassen, während sich der zweite Roboter in den Aufenthaltsbereich des Subjekts hinein bewegt und/oder den Aufenthaltsbereich des Subjekts durchfährt. Wenn dann kein Subjekt in den von dem zweiten Sensor erfassten Daten detektierbar ist, kann der Aufenthaltsbereich des Subjekts verkleinert werden. Zusätzlich oder alternativ wird der Aufenthaltsbereich des Subjekts verkleinert, wenn die Verarbeitungsvorrichtung anhand von einem weiteren Sensor erfassten Daten erkennt, dass das Subjekt den Aufenthaltsbereich betritt und/oder (immer noch) in dem Aufenthaltsbereich anwesend ist, also wenn die Verarbeitungsvorrichtung (insbesondere nach Verstreichen einer gewissen Zeitspanne) anhand der von einem weiteren Sensor erfassten Daten wieder eine aktuelle Position des Subjekts in dem Aufenthaltsbereich bestimmen kann. Wenn also ein Subjekt in den von dem zweiten Sensor erfassten Daten detektierbar ist, kann der Aufenthaltsbereich des Subjekts verkleinert werden, da wieder eine aktuelle (und präzise) Position des Subjekts bekannt ist.

Zusätzlich oder alternativ kann der Aufenthaltsbereich des Subjekts auch vergrößert werden, wenn die Verarbeitungsvorrichtung anhand von dem ersten Sensor und von dem weiteren Sensor erfassten Daten erkennt, dass das Subjekt (wider Erwarten) nicht in dem Aufenthaltsbereich anwesend ist. Das Subjekt kann beispielsweise das letzte Mal, z.B. zum Zeitpunkt T₁, in einem schmalen Gang erfasst bzw. detektiert worden sein. Von beiden Seiten kann dann jeweils ein Roboter mit jeweils zumindest einem Sensor in den Gang einfahren, wobei die Sensoren vorzugsweise jeweils die gesamte Gangbreite erfassen können. Wenn sich dann die beiden Roboter zu einem späteren Zeitpunkt, z.B. T₂, nach verstreichen einer gewissen Zeitspanne, z.B. Δt, in dem Gang treffen, ohne dass dabei das Subjekt von zumindest einem der beiden Sensoren erfasst worden ist, kann der Schluss gezogen werden, dass sich das Subjekt fehlverhalten hat und z.B. auf oder über eine Barriere (z.B. einen Zaun, ein Regal, oder ähnliches) geklettert ist. Für solche oder ähnliche Situationen ist es denkbar, den Aufenthaltsbereich (sprunghaft) zu vergrößern, und zwar vorzugsweise auf eine Größe, die ein nicht nur gehendes (oder laufendes), sondern auch ein kletterndes Subjekt seit der letzten Bestimmung seiner Position mit zumindest einer vorbestimmten Wahrscheinlichkeit erreicht haben könnte. Zusätzlich oder alternativ kann ein Warnsignal ausgegeben werden.

Auf diese Weise kann der Aufenthaltsbereich des Subjekts dynamisch angepasst werden. Es versteht sich, dass zu diesem Zweck zusätzlich oder alternativ zu dem weiteren oder zweiten Sensor ein dritter Sensor verwendet werden kann, der stationär in dem Überwachungsbereich angebracht ist.

Gemäß einer Ausführungsform ist die Vorrichtung dazu ausgebildet, anhand der erfassten (und erhaltenen) Daten einen Sicherheitszustand zu erkennen, wobei die Vorrichtung bei Erkennung des Sicherheitszustandes den Roboter aus dem abgesicherten Steuerungsmodus in einen normalen Steuerungsmodus versetzt. Der Sicherheitszustand umfasst bevorzugt die Abwesenheit des Subjekts von dem Überwachungsbereich oder dem Teil des Überwachungsbereichs, das Verlassen des Überwachungsbereichs oder des Teils des Überwachungsbereichs durch das Subjekt, ein Unterschreiten einer Anzahl an Subjekten in dem Überwachungsbereich oder in dem Teil des Überwachungsbereichs, das Überschreiten einer Entfernung des Roboters zu dem Subjekt, die Abwesenheit des Roboters von dem Schutzbereich, das Bewegen des Roboters aus dem Schutzbereich heraus, die Abwesenheit des Roboters von dem Aufenthaltsbereichs des Subjekts und/oder das Bewegen des Roboters aus dem Aufenthaltsbereich des Subjekts heraus.

Gemäß einer Ausführungsform ist der Sensor ein erster Sensor und der Roboter ein erster Roboter. Das System umfasst dann zusätzlich (zumindest) einen zweiten Roboter und (zumindest) einen zweiten Sensor, wobei der zweite Sensor an dem zweiten Roboter angebracht ist, also mit dem zweiten Roboter gekoppelt ist, und mit dem zweiten Roboter mitbewegbar ist. **In** anderen Worten befindet sich in dem System an jedem Roboter zumindest ein Sensor, der bevorzugt Daten für eine autonome Steuerung des an ihn gekoppelten (mobilen) Roboters erfasst. Die Verarbeitungsvorrichtung ist dazu ausgebildet, (zusätzlich) von dem zweiten Sensor erfasste Daten zu erhalten und für die Bestimmung der absoluten Position des zweiten Roboters, einer relativen Position des Subjekts relativ zu dem zweiten Roboter und/oder der absoluten Position des Subjekts zu verwenden. Die Verarbeitungsvorrichtung ist ferner dazu ausgebildet, basierend zumindest auf der bestimmten relativen Position des Subjekts relativ zu dem ersten Roboter, der bestimmten relativen Position des Subjekts relativ zu dem zweiten Roboter und/oder der bestimmten absoluten Position des Subjekts einen Gefahrenzustand zu erkennen. Die Verarbeitungsvorrichtung ist bevorzugt dazu ausgebildet, bei Erkennung des Gefahrenzustands den ersten Roboter und/oder den zweiten Roboter, insbesondere aus einem normalen Steuerungsmodus, in einen abgesicherten Steuerungsmodus zu versetzen. Es versteht sich, dass der erste Roboter und der zweite Roboter vorzugsweise in den gleichen abgesicherten Steuerungsmodus oder jeweils in einen anderen abgesicherten Steuerungsmodus versetzt werden. In anderen Worten werden die von mehreren Sensoren erfassten Daten zentral in der Verarbeitungsvorrichtung zusammengeführt und dazu verwendet, den Gefahrenzustand zu erkennen. Ausgehend von der Verarbeitungsvorrichtung können dann, auf die Erkennung des Gefahrenzustand hin, ausgewählte oder alle Roboter in dem System in einen abgesicherten Steuerungsmodus versetzt werden. Auf diese Weise können die Sicherheit und die Zuverlässigkeit des Systems erhöht werden.

Gemäß einer Ausführungsform umfasst der zweite Sensor eine Kamera, ein Funkmodul, einen Laserscanner, ein Tag-Lesegerät, ein GPS-Modul und/oder einen Ultraschallsensor. Der erste und der zweite Sensor können Sensoren des gleichen Typs oder eines unterschiedlichen Typs sein.

Gemäß einer Ausführungsform umfasst der abgesicherte Steuerungsmodus, zusätzlich oder alternativ, die Anweisung, dass der erste Roboter den an ihm angebrachten ersten Sensor auf das Subjekt ausrichtet und/oder das Subjekt in dem Überwachungsbereich verfolgt bis die relative Position des Subjekts relativ zu dem zweiten Roboter und/oder die absolute Position des Subjekts anhand den von dem zweiten Sensor erfassten Daten bestimmt werden kann. Auf diese Weise kann die Position des Subjekts in dem Überwachungsbereich lückenlos nachverfolgt werden.

Gemäß einer Ausführungsform umfasst das System (zumindest) einen dritten Sensor. Die Verarbeitungsvorrichtung ist dann dazu ausgebildet, von dem dritten Sensor erfasste Daten zu erhalten und für die Bestimmung der absoluten Position des ersten Roboters, der absoluten Position des zweiten Roboters, der relativen Position des Subjekts relativ zu dem ersten Roboter, der relativen Position des Subjekts relativ zu dem zweiten Roboter und/oder der absoluten Position des Subjekts zu verwenden. Der dritte Sensor umfasst bevorzugt eine Kamera, ein Funkmodul, einen Laserscanner, ein Tag-Lesegerät, ein GPS-Modul, ein mobiles Endgerät, insbesondere ein Smartphone oder ein Tablet, eine Augmented-Reality-Brille, einen Drucksensor, und/oder einen Ultraschallsensor. Der Typ des dritten Sensors ist bevorzugt von dem Typ des ersten und/oder von dem Typ des zweiten Sensors verschieden. Durch die zusätzliche Verwendung der von dem dritten Sensor erfassten Daten für die Bestimmung der absoluten Position des ersten Roboters, der absoluten Position des zweiten Roboters, der relativen Position des Subjekts relativ zu dem ersten Roboter, der relativen Position des Subjekts relativ zu dem zweiten Roboter und/oder der absoluten Position des Subjekts kann eine Redundanz bereitgestellt und dadurch die Sicherheit in dem System erhöht werden.

Gemäß einer Ausführungsform kann der dritte Sensor von dem Subjekt mitbewegt und insbesondere mitgetragen werden. Gemäß einer alternativen Ausführungsform kann der dritte Sensor stationär in dem Überwachungsbereich angebracht sein. Es versteht sich, dass auch noch weitere Sensoren in dem System vorhanden sein können, wobei die weiteren Sensoren zum einen Sensoren umfassen, die die von dem Subjekt mitgetragen werden können, und zum anderen andere Sensoren umfassen, die stationär in den Überwachungsbereich angebracht sind.

Es versteht sich, dass das System eine Anzahl von 1 bis n Roboter, an die jeweils 1 bis m Sensoren angebracht sind, umfassen kann. Ferner kann das System zusätzlich 1 bis k Sensoren umfassen, die stationär in dem Überwachungsbereich angebracht sind und/oder 1 bis I Sensoren umfassen, die von dem Subjekt mitbewegt werden können.

Gemäß einer Ausführungsform ist der dritte Sensor dazu ausgebildet, einen Zugang zu dem Überwachungsbereich oder einen Zugang zu einem Teil des Überwachungsbereichs zu beobachten und dabei Daten zu erfassen, wobei die Verarbeitungsvorrichtung dazu ausgebildet ist, anhand der von dem dritten Sensor erfassten Daten die Anwesenheit und/oder Abwesenheit des Subjekts in dem Überwachungsbereich oder in dem Teil des Überwachungsbereichs festzustellen, das Betreten und/oder Verlassen des Überwachungsbereichs oder des Teils des Überwachungsbereichs durch das Subjekt festzustellen, und/oder eine Anzahl an Subjekten in dem Überwachungsbereich oder in dem Teil des Überwachungsbereichs zu bestimmen. In anderen Worten findet eine Eingangs- und/oder Ausgangszählung statt, die beispielsweise auch durch Benutzereingabe, die durch den dritten Sensor erfasst wird, realisiert werden kann. Die Verarbeitungsvorrichtung kann anhand der von dem dritten Sensor erfassten Daten (insbesondere zusammen mit den von den anderen Sensoren erfassten Daten) genauer nachverfolgen, wie viele Subjekte sich in der Überwachungsbereich zu jedem Zeitpunkt befinden.

Gemäß einer Ausführungsform ist die Verarbeitungsvorrichtung dazu ausgebildet ist, den Gefahrenzustand daran zu erkennen, dass die anhand der von dem dritten Sensor erfassten Daten bestimmte Anzahl an Subjekten in dem Überwachungsbereich von der anhand der von dem ersten Sensor und/oder von dem zweiten Sensor erfassten Daten bestimmten Anzahl an Subjekten in dem Überwachungsbereich abweicht und insbesondere größer ist. In anderen Worten kann der Gefahrenzustand umfassen, dass nicht alle in dem Überwachungsbereich anwesenden Subjekte von den an den Robotern angebrachten Sensoren erfasst werden. Für die Wiederherstellung eines sicheren Betriebs können dann beispielsweise alle Roboter, die sich in dem Überwachungsbereich oder in dem Teil des Bewachungsbereichs befinden, in einen abgesicherten Steuerungsmodus versetzt werden.

Weiterer Gegenstand der Erfindung ist die Verwendung eines hierin beschriebenen Systems zur Bestimmung einer Position zumindest eines Subjekts in einem Überwachungsbereich einer Industrieanlage und/oder zur Erkennung eines Gefahrenzustands zur abgesicherten Steuerung zumindest eines Roboters in dem Überwachungsbereich der Industrieanlage.

Weiterer Gegenstand der Erfindung ist eine Verarbeitungsvorrichtung zur Bestimmung einer Position zumindest eines Subjekts in einem Überwachungsbereich einer Industrieanlage und/oder zur Erkennung eines Gefahrenzustands zur abgesicherten Steuerung zumindest eines Roboters in dem Überwachungsbereich der Industrieanlage. Die Verarbeitungsvorrichtung umfasst einen Prozessor mit assoziiertem Speicher. Die Verarbeitungsvorrichtung ist mit dem Roboter verbindbar ist, wobei der Roboter mobil ist und bevorzugt ein fahrerloses Transportfahrzeug oder einen autonomen mobilen Roboter umfasst.

Die Verarbeitungsvorrichtung ist ferner mit zumindest einem Sensor verbindbar ist, wobei der Sensor an dem Roboter angebracht ist und mit dem Roboter mitbewegbar ist, wobei der Sensor dazu ausgebildet ist, Daten der Umgebung des Roboters zu erfassen. Die Verarbeitungsvorrichtung kann mit unterschiedlichen Typen an Sensoren verbindbar sein.

Erfindungsgemäß ist die Verarbeitungsvorrichtung dazu ausgebildet, die von dem Sensor erfassten Daten zu erhalten, anhand der erfassten Daten eine absolute Position des Roboters in dem Überwachungsbereich zu bestimmen, eine relative Position des zumindest einen Subjekts, insbesondere einer Person, wobei sich das Subjekt in dem Überwachungsbereich aufhalten kann, relativ zu dem Roboter zu bestimmen und/oder eine absolute Position des Subjekts in dem Überwachungsbereich zu bestimmen, basierend zumindest auf der bestimmten relativen Position des Subjekts relativ zu dem Roboter und/oder der bestimmten absoluten Position des Subjekts einen Gefahrenzustand zu erkennen, und bei Erkennung des Gefahrenzustands den Roboter in einen abgesicherten Steuerungsmodus zu versetzen.

Weiterer Gegenstand der Erfindung ist ein Verfahren zur Bestimmung einer Position zumindest eines Subjekts in einem Überwachungsbereich einer Industrieanlage und/oder zur Erkennung eines Gefahrenzustands zur abgesicherten Steuerung zumindest eines Roboters in dem Überwachungsbereich der Industrieanlage, wobei der Roboter mobil ist und bevorzugt ein fahrerloses Transportfahrzeug oder einen autonomen mobilen Roboter umfasst. **In** dem erfindungsgemäßen Verfahren werden mittels eines Sensors, der an dem Roboter angebracht ist und mit dem Roboter mitbewegbar ist, Daten der Umgebung des Roboters erfasst. Anhand der erfassten Daten wird eine absolute Position des Roboters in dem Überwachungsbereich, eine relative Position des zumindest einen Subjekts, insbesondere einer Person, wobei sich das Subjekt in dem Überwachungsbereich aufhalten kann, relativ zu dem Roboter und/oder eine absolute Position des Subjekts in dem Überwachungsbereich bestimmt. Basierend zumindest auf der bestimmten relativen Position des Subjekts relativ zu dem Roboter und/oder der bestimmten absoluten Position des Subjekts wird ein Gefahrenzustand erkannt. Bei Erkennung des Gefahrenzustands wird der Roboter in einen abgesicherten Steuerungsmodus versetzt.

Es versteht sich, dass das bezüglich des erfindungsgemäßen Systems Beschriebene auch für die Verwendung des Systems, die Verarbeitungsvorrichtung und das Verfahren gilt. Dies gilt insbesondere für Ausführungsformen und Vorteile. Weiterhin ist es zu verstehen, dass alle hierin offenbarten Merkmale und Ausführungsformen kombiniert werden können, wenn nicht ausdrücklich anders angegeben.

Nachfolgend wird die Erfindung rein beispielhaft anhand möglicher Ausführungsformen unter Bezugnahme auf die beigefügte Zeichnung beschrieben. Es zeigen:
- Fig. 1: eine schematische Darstellung eines Systems gemäß einer Ausführungsform der Erfindung;
- Fig. 2A: eine schematische Darstellung eines Systems gemäß einer Ausführungsform der Erfindung in einer ersten Situation;
- Fig. 2B: eine schematische Darstellung des Systems von Fig. 2A in einer zweiten Situation;
- Fig. 3: eine schematische Darstellung eines Systems gemäß einer Ausführungsform der Erfindung;
- Fig. 4: eine schematische Darstellung eines Systems gemäß einer Ausführungsform der Erfindung; und
- Fig. 5: eine schematische Darstellung des Systems gemäß einer Ausführungsform der Erfindung.

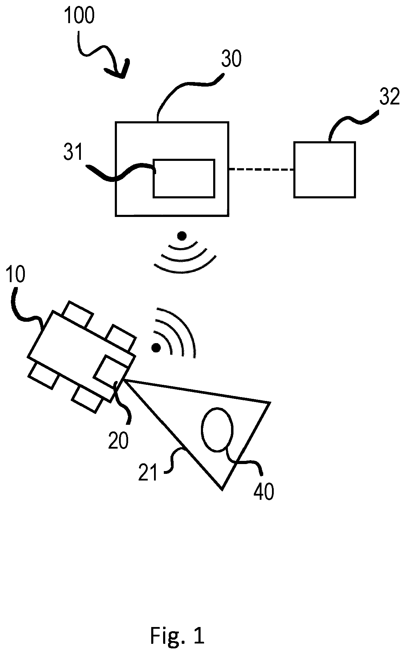

Das in Fig.1 dargestellte System 100 umfasst zumindest einen Roboter 10, der mobil ist, bevorzugt ein fahrerloses Transportfahrzeug oder einen autonomen mobilen Roboter umfasst, und sich in einem Überwachungsbereich (nicht in Fig. 1 dargestellt) einer Industrieanalage befindet. Das System 100 umfasst ferner zumindest einen Sensor 20, wobei der Sensor 20 an dem Roboter 10 angebracht ist und mit dem Roboter 10 mitbewegbar ist. Der Sensor 20 ist dazu ausgebildet, Daten der Umgebung des Roboters 10 zu erfassen. Der Sensor 20 kann beispielsweise eine 3D-Kamera und insbesondere eine ToF-Kamera sein. Das System 100 umfasst zudem eine Verarbeitungsvorrichtung 30, wobei die Verarbeitungsvorrichtung 30 einen Prozessor 31 mit assoziiertem Speicher 32 umfasst. Der Speicher 32 kann Teil der Verarbeitungsvorrichtung 30 sein oder ein externer Speicher sein, auf den die Verarbeitungsvorrichtung 30 zugreifen kann. Die Verarbeitungsvorrichtung 30 ist mit dem Roboter 10 und mit dem Sensor 20 bevorzugt mittels einer kabellosen Signalverbindung verbunden und ist dazu ausgebildet, die von dem Sensor 20 erfassten Daten zu erhalten. Die Verarbeitungsvorrichtung 30 ist ferner dazu ausgebildet, anhand der erfassten Daten eine absolute Position des Roboters 10 in dem Überwachungsbereich zu bestimmen, eine relative Position zumindest eines Subjekts 40, insbesondere einer Person, wobei sich das Subjekt 40 in dem Überwachungsbereich aufhalten kann, relativ zu dem Roboter 10 zu bestimmen und/oder eine absolute Position des Subjekts 40 in dem Überwachungsbereich zu bestimmen. Die Verarbeitungsvorrichtung 30 ist ferner dazu ausgebildet, basierend zumindest auf der bestimmten relativen Position des Subjekts 40 relativ zu dem Roboter 10 und/oder der bestimmten absoluten Position des Subjekts 40 einen Gefahrenzustand zu erkennen, und bei Erkennung des Gefahrenzustands den Roboter 10 in einen abgesicherten Steuerungsmodus zu versetzen.

Die Verarbeitungsvorrichtung 30 in Fig. 1 kann dazu ausgebildet ist, die absolute Position Roboters 10, die relative Position des Subjekts 40 und/oder die absolute Position des Subjekts 40 bevorzugt mittels SLAM zu bestimmen. In anderen Worten ist die Verarbeitungsvorrichtung 30 dazu ausgebildet, eine dynamische Karte zu erzeugen, in der die bestimmte absolute Position Roboters 10, die bestimmte relative Position des Subjekts 40 relativ zu dem Roboter 10 und/oder die bestimmte absolute Position des Subjekts 40 ständig neu eingetragen werden oder bereits eingetragene entsprechende Positionswerte aktualisiert oder überschrieben werden. Es versteht sich, dass die mittels SLAM generierte dynamische Karte dabei in dem assoziierten Speicher 32 vorgehalten werden kann.

In dem System 100 in Fig. 1 kann der abgesicherte Steuerungsmodus ein Absenken einer Bewegungsgeschwindigkeit des Roboters 10, eine Verlangsamung des Roboters 10, ein Verfahren des Roboters 10 in eine Halteposition, einen Sicherheitsbetrieb, eine Änderung der Bewegungsrichtung des Roboters 10, eine Änderung einer Route des Roboters 10, eine Stilllegung des Roboters 10, ein Stoppen der Bewegung des Roboters 10, eine Umleitung des Roboters 10, und/oder eine Änderung eines Bewegungsablaufs des Roboters 10, eine Änderung einer von dem Roboter 10 ausgeführten Aktion umfasst.

In dem in Fig. 1 dargestellten System 100 kann der abgesicherte Steuerungsmodus, zusätzlich oder alternativ, die Anweisung umfassen, dass der Roboter 10 den an ihm angebrachten Sensor 20, und insbesondere das Sichtfeld 21 des Sensors 20, auf das Subjekt 40 ausrichtet und/oder das Subjekt 40 in dem Überwachungsbereich verfolgt. Der Sensor kann beispielsweise drehbar an dem Roboter 10 angebracht sein. Der Roboter 10 kann dann eine motorisierte Halterung für den Sensor umfassen, wobei der Motor (nicht in Fig. 1 gezeigt) aktiviert wird und den Sensor dreht, wenn der Roboter 10 die Anweisung von der Verarbeitungsvorrichtung 30 erhält. Auf diese Weise kann das Sichtfeld 21 des Sensors 20 auf das Subjekt 40 ausgerichtet werden. Es ist vorstellbar, dass der Roboter 10, zusätzlich oder alternativ, auf den Erhalt der Anweisung hin das Subjekt 40 unter Einhaltung eines vordefinierten Sicherheitsabstands in dem Überwachungsbereich verfolgt.

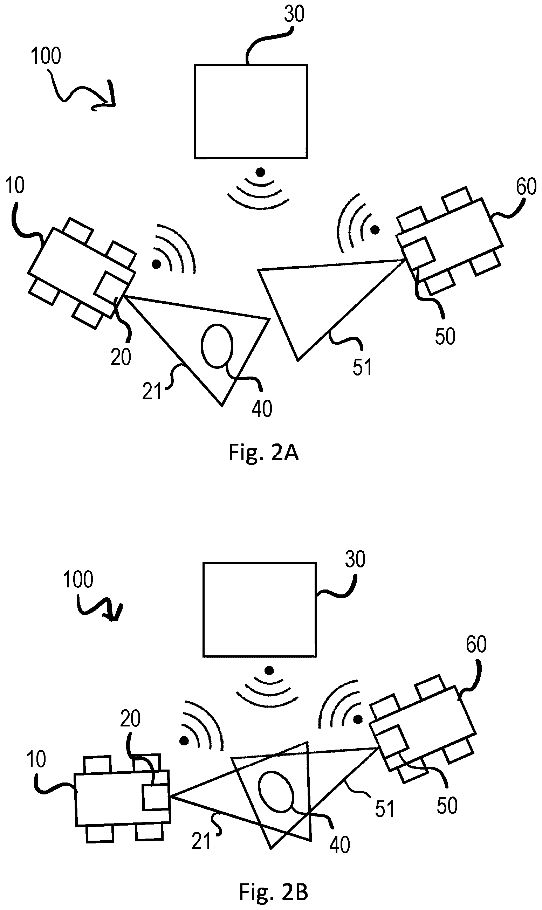

Das in Fig. 2A und Fig. 2B dargestellte System 100 umfasst ähnliche oder die gleichen Komponenten wie das System 100 in Fig. 1, wobei der Sensor 20 ein erster Sensor 20 und der Roboter 10 ein erster Roboter 10 ist. Das System 100 in Fig. 2A und Fig. 2B umfasst zusätzlich einen zweiten Roboter 60 und einen zweiten Sensor 50, wobei der zweite Sensor 50 an dem zweiten Roboter 60 angebracht ist und mit dem zweiten Roboter 60 mitbewegbar ist. Es versteht sich, dass der zweite Roboter 60 ebenfalls mobil ist, bevorzugt ein fahrerloses Transportfahrzeug oder einen autonomen mobilen Roboter umfasst und sich in dem Überwachungsbereich (nicht in Fig. 2A und Fig. 2B dargestellt) der Industrieanalage befindet. Es versteht sich, dass die Verarbeitungsvorrichtung 30 mit dem zweiten Roboter 60 und mit dem zweiten Sensor 50 bevorzugt mittels einer kabellosen Signalverbindung verbunden ist. **In** dem System 100 in Fig. 2A und Fig. 2B ist die Verarbeitungsvorrichtung 30 dazu ausgebildet, (zusätzlich) von dem zweiten Sensor 50 erfasste Daten zu erhalten und für die Bestimmung der absoluten Position des zweiten Roboters 60, einer relativen Position des Subjekts 40 relativ zu dem zweiten Roboter 60 und/oder der absoluten Position des Subjekts 40 zu verwenden. Die Verarbeitungsvorrichtung 30 in Fig. 2A und Fig. 2B ist ferner dazu ausgebildet, basierend zumindest auf der bestimmten relativen Position des Subjekts 40 relativ zu dem ersten Roboter 10, der bestimmten relativen Position des Subjekts 40 relativ zu dem zweiten Roboter 60 und/oder der bestimmten absoluten Position des Subjekts 40 einen Gefahrenzustand zu erkennen. Die Verarbeitungsvorrichtung 30 in Fig. 2A und Fig. 2B ist zudem dazu ausgebildet, bei Erkennung des Gefahrenzustands den ersten Roboter 10 und/oder den zweiten Roboter 60 in einen abgesicherten Steuerungsmodus zu versetzen. Der erste Roboter 10 und der zweite Roboter 60 können in den gleichen abgesicherten Steuerungsmodus oder jeweils in einen anderen abgesicherten Steuerungsmodus versetzt werden.

**In** anderen Worten werden die von dem ersten Sensor 20 und dem zweiten Sensor 50 erfassten Daten zentral in der Verarbeitungsvorrichtung 30 zusammengeführt und dazu verwendet, den Gefahrenzustand zu erkennen. Die Verarbeitungsvorrichtung 30 kann dann dazu ausgebildet sein, auf die Erkennung des Gefahrenzustand hin den ersten Roboter 10 oder den zweiten Roboter 60 oder beide Roboter 10, 60 in einen abgesicherten Steuerungsmodus zu versetzen. Auf diese Weise können die Sicherheit und die Zuverlässigkeit des Systems 100 erhöht werden.

**In** Fig. 2A ist das System 100 in einer ersten Situation dargestellt, in der sich das Subjekt 40 in dem Sichtfeld 21 des ersten Sensors 21 befindet. Die Verarbeitungseinrichtung 30 kann dann anhand der von dem ersten Sensor 20 erfassten Daten eine relative Position des Subjekts 40 relativ zu dem ersten Roboter 10 und/oder eine absolute Position des Subjekts 40 in dem Überwachungsbereich bestimmen, den Gefahrenzustand erkennen und den ersten und/oder zweiten Roboter 10, 60 in den abgesicherten Steuerungsmodus versetzen. Der abgesicherte Steuerungsmodus kann dann die Anweisung umfassen, dass der erste Roboter 10 den an ihm angebrachten ersten Sensor 20 auf das Subjekt 40 ausrichtet, sodass das Sichtfeld 21 des Sensors 20 auf das Subjekt 40 gerichtet ist (und insbesondere gerichtet bleibt), und/oder das Subjekt 40 in dem Überwachungsbereich verfolgt bis sich das Subjekt ebenfalls in dem Sichtfeld 51 des zweiten Sensors 50 befindet, wie es in der in Fig. 2B dargestellten zweiten Situation gezeigt ist, und in der Folge die relative Position des Subjekts 40 relativ zu dem zweiten Roboter 60 und/oder die absolute Position des Subjekts 40 anhand den von dem zweiten Sensor 50 erfassten Daten bestimmt werden kann. Es versteht sich, dass die Anweisung zusätzlich umfassen kann, dass der zweite Roboter 60 den zweiten Sensor 50 auf das Subjekt 40 ausrichtet, sodass das Sichtfeld 51 des zweiten Sensors 50 auf das Subjekt 40 gerichtet ist. Auf diese Weise kann die Position des Subjekts 40 in dem Überwachungsbereich möglichst lückenlos nachverfolgt werden.

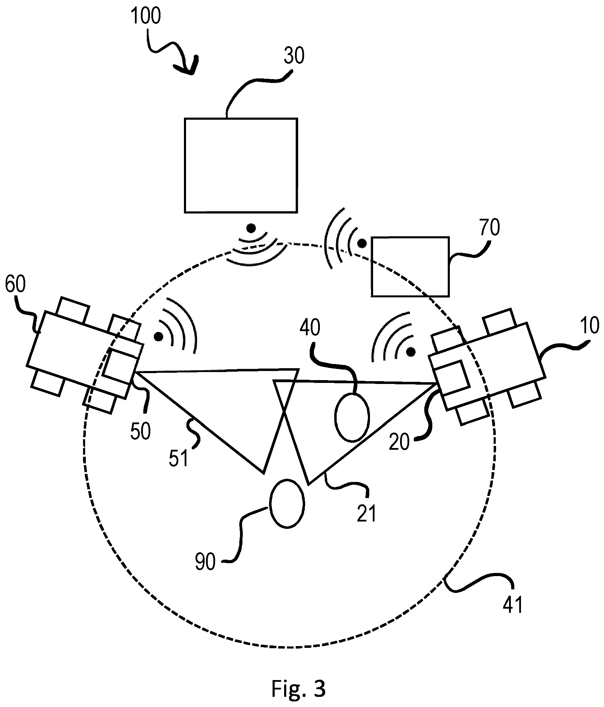

Das in Fig. 3 dargestellte System 100 umfasst ähnliche oder die gleichen Komponenten wie das System 100 in Fig. 2A und Fig. 2B. Das System 100 in Fig. 3 umfasst zusätzlich einen dritten Sensor 70. Die Verarbeitungsvorrichtung 30 des Systems 100 in Fig. 3 ist dann dazu ausgebildet, (zusätzlich) von dem dritten Sensor 70 erfasste Daten zu erhalten und für die Bestimmung der absoluten Position des ersten Roboters 10, der absoluten Position des zweiten Roboter 60, der relativen Position des Subjekts 40 relativ zu dem ersten Roboter 10, der relativen Position des Subjekts 40 relativ zu dem zweiten Roboter 60, und/oder der absoluten Position des Subjekts 40 zu verwenden. Es versteht sich, dass das Subjekt 40 ein erstes Subjekt 40 sein kann und sich in dem Überwachungsbereich 41 auch mehrere Subjekte und insbesondere ein zweites Subjekt 90 aufhalten kann. Die Verarbeitungsvorrichtung 30 des Systems in Fig. 3 ist dementsprechend dazu ausgebildet, ebenfalls die Position des zweiten Subjekts 90 relativ zu dem ersten Roboter 10, die relative Position des zweiten Subjekts 90 relativ zu dem zweiten Roboter 60 und/oder die absolute Position des zweiten Subjekts 90 in dem Überwachungsbereich zu bestimmen.

Der dritte Sensor 70 des Systems 100 in Fig. 3 umfasst bevorzugt eine Kamera, ein Funkmodul, einen Laserscanner, ein Tag-Lesegerät, ein GPS-Modul, ein mobiles Endgerät, insbesondere ein Smartphone oder ein Tablet, eine Augmented-Reality-Brille, und/oder einen Ultraschallsensor. Der dritte Sensor 70 kann beispielsweise von einem der Subjekte 40, 90 mitbewegt und insbesondere mitgetragen werden. In diesem Fall umfasst der dritte Sensor 70 bevorzugt ein mobiles Endgerät, insbesondere ein Smartphone oder ein Tablet, oder eine Augmented-Reality-Brille. Alternativ kann der dritte Sensor 70 stationär in dem Überwachungsbereich angebracht sein. Es versteht sich, dass auch noch weitere Sensoren in dem System vorhanden sein können, wobei die weiteren Sensoren zum einen Sensoren umfassen, die die von den Subjekten 40, 90 mitgetragen werden können, und zum anderen andere Sensoren umfassen, die stationär in den Überwachungsbereich angebracht sind.

Der dritte Sensor 70 des Systems 100 in Fig. 3 kann beispielsweise dazu ausgebildet sein, einen Zugang zu dem Überwachungsbereich 41 oder einen Zugang zu einem Teil des Überwachungsbereichs 41 zu beobachten und dabei Daten zu erfassen. Die Verarbeitungsvorrichtung 30 in Fig. 3 ist dann dazu ausgebildet, anhand der von dem dritten Sensor 70 erfassten Daten die Anwesenheit und/oder Abwesenheit des ersten Subjekts 40 und/oder des zweiten Subjekts 90 in dem Überwachungsbereich 41 oder in dem Teil des Überwachungsbereichs 41 festzustellen, das Betreten und/oder Verlassen des Überwachungsbereichs 41 oder des Teils des Überwachungsbereichs 41 durch das erste Subjekt 40 und/oder das zweite Subjekt 90 festzustellen, und/oder eine Anzahl an Subjekten 40,90 in dem Überwachungsbereich 41 oder in dem Teil des Überwachungsbereichs 41 zu bestimmen. **In** anderen Worten stellt der dritte Sensor 70 eine Ausgangs- und/oder Eingangszählung bereit. **In** dem in Fig. 3 gezeigten Beispiel befinden sich zwei Subjekte in dem Überwachungsbereich 41, die Anzahl an Subjekten in dem Überwachungsbereich 41 kann jedoch auch weniger als zwei oder mehr als zwei sein.

In dem in Fig. 3 gezeigten System 100 kann die Verarbeitungsvorrichtung 30 dazu ausgebildet sein, den Gefahrenzustand daran zu erkennen, dass die anhand der von dem dritten Sensor 70 erfassten Daten bestimmte Anzahl an Subjekten 40,90 in dem Überwachungsbereich 41 von der anhand der von dem ersten Sensor 20 und/oder dem zweiten Sensor 50 erfassten Daten bestimmten Anzahl an Subjekten 40,90 in dem Überwachungsbereich 41 abweicht und insbesondere größer ist.

In dem in Fig. 3 gezeigten Beispiel kann der erkannte Gefahrenzustand also folgendes umfassen. Die Verarbeitungsvorrichtung 30 stellt anhand der von dem dritten Sensor 70 erfassten Daten fest, dass sich (zu einem bestimmten Zeitpunkt) zwei Subjekte 40,90 in dem Überwachungsbereich 41 befinden müssen. Da sich, wie in Fig. 3 beispielhaft gezeigt, aber nur das erste Subjekt 40 in dem Sichtfeld 21 des ersten Sensors 20 befindet und das zweite Subjekt sich (zu dem bestimmten Zeitpunkt) in keinem Sichtfeld 21,51 der Sensoren 20,50 befindet, kann die Verarbeitungsvorrichtung 30 feststellen, dass (zu dem bestimmten Zeitpunkt) nur das erste Subjekt 40 in den von den an den Robotern 10,60 angebrachten Sensoren 20,50 erfassten Daten detektierbar ist. Auf diese Weise kann die Verarbeitungsvorrichtung 30 den Gefahrenzustand erkennen. Für die Wiederherstellung eines sicheren Betriebs können dann beispielsweise die beide Roboter 10,60, die sich in dem Überwachungsbereich 41 oder in dem Teil des Bewachungsbereichs 41 befinden, mittels der Verarbeitungsvorrichtung 30 in einen abgesicherten Steuerungsmodus versetzt werden.

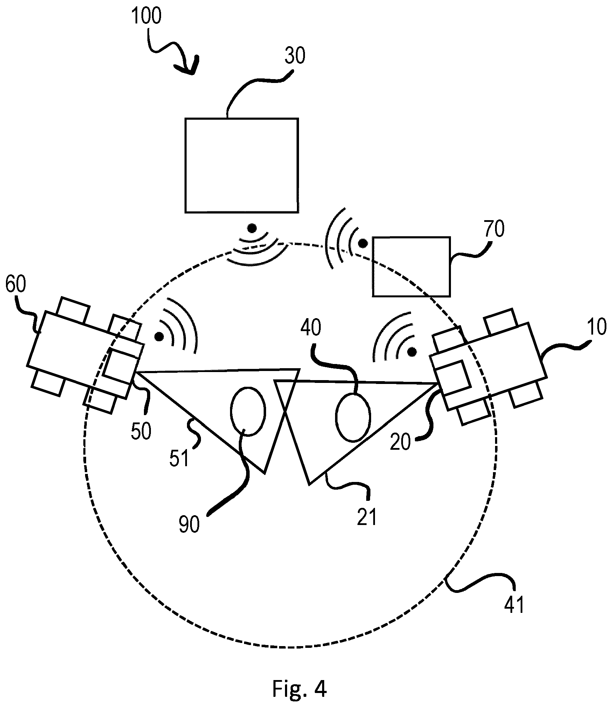

So kann beispielsweise, wie es für das in Fig. 4 dargestellte System 100 gezeigt ist, auf die Erkennung des Gefahrenzustands hin der erste Roboter 10 und der zweite Roboter 60 aus einem normalen Steuerungsmodus in einen abgesicherten Steuerungsmodus versetzt werden, indem sowohl eine Bewegung des ersten Roboters 10 also auch eine Bewegung des zweiten Roboters 60 gestoppt werden. Wenn sich das zweite Subjekt 90 anschließend in das Sichtfeld 21,51 eines der Sensoren 20,50 bewegt und daher in den von den Sensoren 20,50 erfassten Daten detektierbar ist, kann der Gefahrenzustand aufgehoben und/oder ein entsprechender Sicherheitszustand mittels der Verarbeitungsvorrichtung 30 erkannt werden. Der erste Roboter 10 und der zweite Roboter 60 können dann aus dem abgesicherten Steuerungsmodus wieder in den normalen Steuerungsmodus versetzt werden.

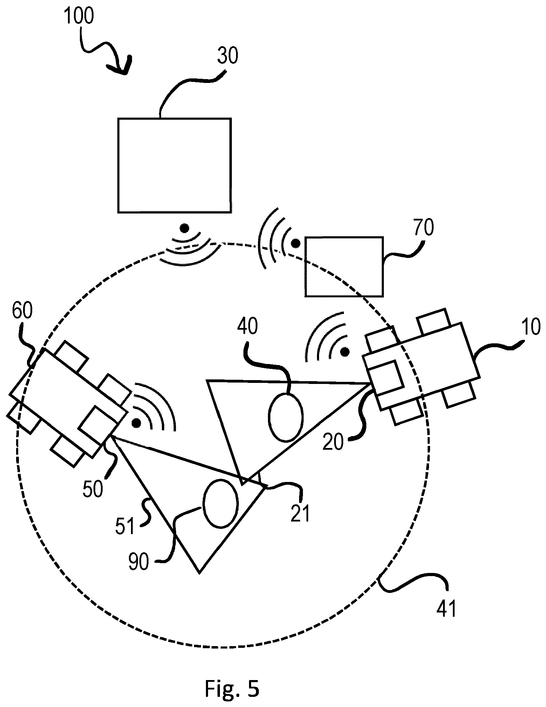

Alternativ dazu kann, wie es für das in Fig. 5 dargestellte System 100 gezeigt ist, auf die Erkennung des Gefahrenzustands hin der erste Roboter 10 und der zweite Roboter 60 aus einem normalen Steuerungsmodus in einen abgesicherten Steuerungsmodus versetzt werden, indem eine Bewegung des ersten Roboters 10 gestoppt wird und eine Bewegungsgeschwindigkeit des zweiten Roboters 60 abgesenkt wird, sodass sich der zweite Roboter 60 noch verlangsamt in dem Überwachungsbereich weiter fortbewegen kann. Das Sichtfeld 51 des zweiten Sensors 50 kann mit der Bewegung des zweiten Roboters 60 weiterbewegt werden, bis das zweite Subjekt 90 in dem Sichtfeld 51 des zweiten Sensors 50 erfasst wird und in der Folge in den von den Sensoren 20,50 erfassten Daten detektierbar ist. Der Gefahrenzustand kann daraufhin aufgehoben und/oder ein entsprechender Sicherheitszustand mittels der Verarbeitungsvorrichtung 30 erkannt werden. Der erste Roboter 10 und der zweite Roboter 60 können dann aus dem abgesicherten Steuerungsmodus wieder in den normalen Steuerungsmodus versetzt werden. Der erste Roboter 10 und/oder der zweite Roboter 60 können sich dann zum Beispiel mit ihrer normalen Bewegungsgeschwindigkeit weiterbewegen.

## Patentansprüche

1. System (100) zur Bestimmung einer Position zumindest eines Subjekts in einem Überwachungsbereich einer Industrieanlage und/oder zur Erkennung eines Gefahrenzustands zur abgesicherten Steuerung zumindest eines Roboters (10) in dem Überwachungsbereich (41) der Industrieanlage, umfassend
den Roboter (10), wobei der Roboter (10) mobil ist, wobei der Roboter (10) bevorzugt ein fahrerloses Transportfahrzeug oder einen autonomen mobilen Roboter (10) umfasst;
zumindest einen Sensor (20), wobei der Sensor (20) an dem Roboter (10) angebracht ist und mit dem Roboter (10) mitbewegbar ist, wobei der Sensor (20) dazu ausgebildet ist, Daten der Umgebung des Roboters (10) zu erfassen; und
eine Verarbeitungsvorrichtung (30), wobei die Verarbeitungsvorrichtung (30) einen Prozessor (31) mit assoziiertem Speicher (32) umfasst, mit dem Roboter (10) und mit dem Sensor (20) verbunden ist und dazu ausgebildet ist,
die von dem Sensor (20) erfassten Daten zu erhalten,
anhand der erfassten Daten eine absolute Position des Roboters (10) in dem Überwachungsbereich (41) zu bestimmen, eine relative Position des zumindest einen Subjekts (40, 90), insbesondere einer Person, wobei sich das Subjekt (40, 90) in dem Überwachungsbereich (41) aufhalten kann, relativ zu dem Roboter (10) zu bestimmen und/oder eine absolute Position des Subjekts (40, 90) in dem Überwachungsbereich (41) zu bestimmen, basierend zumindest auf der bestimmten relativen Position des Subjekts (40, 90) relativ zu dem Roboter (10) und/oder der bestimmten absoluten Position des Subjekts (40, 90) einen Gefahrenzustand zu erkennen, und
bei Erkennung des Gefahrenzustands den Roboter (10) in einen abgesicherten Steuerungsmodus zu versetzen.

2. System (100) nach Anspruch 1, wobei die Verarbeitungsvorrichtung (30) dazu ausgebildet ist, die absolute Position Roboters (10), die relative Position des Subjekts (40, 90) und/oder die absolute Position des Subjekts (40, 90) bevorzugt mittels SLAM zu bestimmen.

3. System (100) nach Anspruch 1 oder 2, wobei der abgesicherte Steuerungsmodus ein Absenken einer Bewegungsgeschwindigkeit des Roboters (10), eine Verlangsamung des Roboters (10), ein Verfahren des Roboters (10) in eine Halteposition, einen Sicherheitsbetrieb, eine Änderung der Bewegungsrichtung des Roboters (10), eine Änderung einer Route des Roboters (10), eine Stilllegung des Roboters (10), ein Stoppen der Bewegung des Roboters (10), eine Umleitung des Roboters (10), und/oder eine Änderung eines Bewegungsablaufs des Roboters (10), eine Änderung einer von dem Roboter (10) ausgeführten Aktion umfasst.

4. System (100) nach einem der voranstehenden Ansprüche, wobei der abgesicherte Steuerungsmodus die Anweisung umfasst, dass der Roboter (10) den an ihm angebrachten Sensor (20) auf das Subjekt (40, 90) ausrichtet und/oder das Subjekt (40, 90) in dem Überwachungsbereich (41) verfolgt.

5. System (100) nach einem der voranstehenden Ansprüche, wobei der Sensor (20) eine Kamera, ein Funkmodul, einen Laserscanner, ein Tag-Lesegerät, ein GPS-Modul und/oder einen Ultraschallsensor umfasst.

6. System (100) nach einem der voranstehenden Ansprüche, wobei der Gefahrenzustand die Anwesenheit des Subjekts (40, 90) in dem Überwachungsbereich (41) oder in einem Teil des Überwachungsbereichs (41), das Betreten des Überwachungsbereichs (41) oder des Teils des Überwachungsbereichs (41) durch das Subjekt (40, 90), ein Erreichen oder Überschreiten einer Anzahl an Subjekten (40, 90) in dem Überwachungsbereich (41) oder in dem Teil des Überwachungsbereichs (41), das Erreichen oder Unterschreiten einer Entfernung des Roboters (10) zu dem Subjekt (40, 90), die Anwesenheit des Roboters (10) in einem Schutzbereich in dem Überwachungsbereich (41), das Bewegen des Roboters (10) in den Schutzbereich hinein, die Anwesenheit des Roboters (10) in einem Aufenthaltsbereich des Subjekts (40, 90) und/oder das Bewegen des Roboters (10) in den Aufenthaltsbereich des Subjekts (40, 90) hinein umfasst.

7. System (100) nach Anspruch 6, wobei der Aufenthaltsbereich des Subjekts (40, 90) auf einem möglichen Aufenthaltsort des Subjekts (40, 90) basiert, wobei der mögliche Aufenthaltsort des Subjekts (40, 90) auf der bestimmten relativen Position des Subjekts (40, 90) relativ zu dem Roboter (10) und/oder der bestimmten absoluten Position des Subjekts (40, 90) basiert, wobei die Größe und/oder die Lage des Aufenthaltsbereich des Subjekts (40, 90) bevorzugt veränderbar ist.

8. System (100) nach Anspruch 7,
wobei Aufenthaltsbereich des Subjekts (40, 90) verkleinert wird, wenn die Verarbeitungsvorrichtung (30) anhand von einem weiteren Sensor (50, 70) erfassten Daten erkennt, dass das Subjekt (40, 90) den Aufenthaltsbereich verlässt und/oder nicht in dem Aufenthaltsbereich anwesend ist; und/oder wobei der Aufenthaltsbereich des Subjekts (40, 90) verkleinert wird, wenn die Verarbeitungsvorrichtung (30) anhand von einem weiteren Sensor (50, 70) erfassten Daten erkennt, dass das Subjekt (40, 90) den Aufenthaltsbereich betritt und/oder in dem Aufenthaltsbereich anwesend ist.

9. System (100) nach einem der voranstehenden Ansprüche,
wobei der Sensor (20) ein erster Sensor (20) ist und der Roboter (10) ein erster Roboter (10) ist,
wobei das System (100) einen zweiten Roboter (60) und einen zweiten Sensor (50) umfasst,
wobei der zweite Sensor (50) an dem zweiten Roboter (60) angebracht ist und mit dem zweiten Roboter (60) mitbewegbar ist,
wobei die Verarbeitungsvorrichtung (30) dazu ausgebildet ist, von dem zweiten Sensor (50) erfasste Daten zu erhalten und für die Bestimmung der absoluten Position des zweiten Roboters (60), einer relativen Position des Subjekts (40, 90) relativ zu dem zweiten Roboter (60) und/oder der absoluten Position des Subjekts (40, 90) zu verwenden, und
wobei die Verarbeitungsvorrichtung (30) dazu ausgebildet ist, basierend zumindest auf der bestimmten relativen Position des Subjekts (40, 90) relativ zu dem ersten Roboter (10), der bestimmten relativen Position des Subjekts (40, 90) relativ zu dem zweiten Roboter (60) und/oder der bestimmten absoluten Position des Subjekts (40, 90) einen Gefahrenzustand zu erkennen, und
wobei die Verarbeitungsvorrichtung (30) bevorzugt dazu ausgebildet ist, bei Erkennung des Gefahrenzustands den ersten Roboter (10) und/oder den zweiten Roboter (60) in einen abgesicherten Steuerungsmodus zu versetzen.

10. System (100) nach Anspruch 9, wobei der abgesicherte Steuerungsmodus die Anweisung umfasst, dass der erste Roboter (10) den an ihm angebrachten ersten Sensor (20) auf das Subjekt (40, 90) ausrichtet und/oder das Subjekt (40, 90) in dem Überwachungsbereich (41) verfolgt bis die relative Position des Subjekts (40, 90) relativ zu dem zweiten Roboter (60) und/oder die absolute Position des Subjekts (40, 90) anhand den von dem zweiten Sensor (50) erfassten Daten bestimmt werden kann.

11. System (100) nach einem der voranstehenden Ansprüche, wobei das System (100) einen dritten Sensor (70) umfasst, und wobei die Verarbeitungsvorrichtung (30) dazu ausgebildet ist, von dem dritten Sensor (70) erfasste Daten zu erhalten und für die Bestimmung der absoluten Position des ersten Roboters (10), der absoluten Position des zweiten Roboter (60), der relativen Position des Subjekts (40, 90) relativ zu dem ersten Roboter (10), der relativen Position des Subjekts (40, 90) relativ zu dem zweiten Roboter (60), und/oder der absoluten Position des Subjekts (40, 90) zu verwenden, wobei der dritte Sensor (70) bevorzugt eine Kamera, ein Funkmodul, einen Laserscanner, ein Tag-Lesegerät, ein GPS-Modul, ein mobiles Endgerät, insbesondere ein Smartphone oder ein Tablet, eine Augmented-Reality-Brille, und/oder einen Ultraschallsensor umfasst.

12. System (100) nach Anspruch 11, wobei der dritte Sensor (70) dazu ausgebildet ist, einen Zugang zu dem Überwachungsbereich (41) oder einen Zugang zu einem Teil des Überwachungsbereichs (41) zu beobachten und dabei Daten zu erfassen, wobei die Verarbeitungsvorrichtung (30) dazu ausgebildet ist, anhand der von dem dritten Sensor (70) erfassten Daten die Anwesenheit und/oder Abwesenheit des Subjekts (40, 90) in dem Überwachungsbereich (41) oder in dem Teil des Überwachungsbereichs (41) festzustellen, das Betreten und/oder Verlassen des Überwachungsbereichs (41) oder des Teils des Überwachungsbereichs (41) durch das Subjekt (40, 90) festzustellen, und/oder eine Anzahl an Subjekten (40, 90) in dem Überwachungsbereich (41) oder in dem Teil des Überwachungsbereichs (41) zu bestimmen, wobei die Verarbeitungsvorrichtung (30) vorzugsweise dazu ausgebildet ist, den Gefahrenzustand daran zu erkennen, dass eine anhand der von dem dritten Sensor (70) erfassten Daten bestimmte Anzahl an Subjekten (40, 90) in dem Überwachungsbereich (41) von einer anhand der von dem ersten Sensor (20) und/oder dem zweiten Sensor (50) erfassten Daten bestimmten Anzahl an Subjekten (40, 90) in dem Überwachungsbereich (41) abweicht.

13. Verwendung eines Systems (100) nach einem der voranstehenden Ansprüche zur Bestimmung einer Position zumindest eines Subjekts in einem Überwachungsbereich einer Industrieanlage und/oder zur Erkennung eines Gefahrenzustands zur abgesicherten Steuerung zumindest eines Roboters (10) in dem Überwachungsbereich (41) der Industrieanlage.

14. Verarbeitungsvorrichtung (30) zur Bestimmung einer Position zumindest eines Subjekts in einem Überwachungsbereich einer Industrieanlage und/oder zur Erkennung eines Gefahrenzustands zur abgesicherten Steuerung zumindest eines Roboters (10) in dem Überwachungsbereich (41) der Industrieanlage,
wobei die Verarbeitungsvorrichtung (30) einen Prozessor (31) mit assoziiertem Speicher (32) umfasst,
wobei die Verarbeitungsvorrichtung (30) mit dem Roboter (10) verbindbar ist, wobei der Roboter (10) mobil ist und bevorzugt ein fahrerloses Transportfahrzeug oder einen autonomen mobilen Roboter (10) umfasst,
wobei die Verarbeitungsvorrichtung (30) mit zumindest einem Sensor (20) verbindbar ist, wobei der Sensor (20) an dem Roboter (10) angebracht ist und mit dem Roboter (10) mitbewegbar ist, wobei der Sensor (20) dazu ausgebildet ist, Daten der Umgebung des Roboters (10) zu erfassen, und
wobei die Verarbeitungsvorrichtung (30) dazu ausgebildet ist,
die von dem Sensor (20) erfassten Daten zu erhalten,
anhand der erfassten Daten eine absolute Position des Roboters (10) in dem Überwachungsbereich (41) zu bestimmen, eine relative Position des zumindest einen Subjekts (40, 90), insbesondere einer Person, wobei sich das Subjekt (40, 90) in dem Überwachungsbereich (41) aufhalten kann, relativ zu dem Roboter (10) zu bestimmen und/oder eine absolute Position des Subjekts (40, 90) in dem Überwachungsbereich (41) zu bestimmen, basierend zumindest auf der bestimmten relativen Position des Subjekts (40, 90) relativ zu dem Roboter (10) und/oder der bestimmten absoluten Position des Subjekts (40, 90) einen Gefahrenzustand zu erkennen, und
bei Erkennung des Gefahrenzustands den Roboter (10) in einen abgesicherten Steuerungsmodus zu versetzen.

15. Verfahren zur Bestimmung einer Position zumindest eines Subjekts in einem Überwachungsbereich einer Industrieanlage und/oder zur Erkennung eines Gefahrenzustands zur abgesicherten Steuerung zumindest eines Roboters (10) in dem Überwachungsbereich (41) der Industrieanlage,
wobei der Roboter (10) mobil ist und bevorzugt ein fahrerloses Transportfahrzeug oder einen autonomen mobilen Roboter (10) umfasst,
wobei mittels eines Sensors (20), der an dem Roboter (10) angebracht ist und mit dem Roboter (10) mitbewegbar ist, Daten der Umgebung des Roboters (10) erfasst werden,
wobei anhand der erfassten Daten eine absolute Position des Roboters (10) in dem Überwachungsbereich (41), eine relative Position des zumindest einen Subjekts (40, 90), insbesondere einer Person, wobei sich das Subjekt (40, 90) in dem Überwachungsbereich (41) aufhalten kann, relativ zu dem Roboter (10) und/oder eine absolute Position des Subjekts (40, 90) in dem Überwachungsbereich (41) bestimmt werden,
wobei basierend zumindest auf der bestimmten relativen Position des Subjekts (40, 90) relativ zu dem Roboter (10) und/oder der bestimmten absoluten Position des Subjekts (40, 90) einen Gefahrenzustand erkannt wird, und
wobei bei Erkennung des Gefahrenzustands den Roboter (10) in einen abgesicherten Steuerungsmodus versetzt wird.
